## Europäisches Patentamt

## European Patent Office

## Office européen des brevets

(19)

(11) Veröffentlichungsnummer: **0 101 567**
**B1**

(12) # EUROPÄISCHE PATENTSCHRIFT

(45) Veröffentlichungstag der Patentschrift:
**01.06.88**

(21) Anmeldenummer: **83107143.6**

(22) Anmeldetag: **21.07.83**

(51) Int. Cl.⁴: **C 08 L 33/02,** C 08 L 35/00,
D 06 P 1/52, D 06 P 1/667,
D 06 P 1/647, D 06 M 1/08 //
D06P3/60

(54) **Wässrige konzentrierte Lösungen von Mischungen aus organischen Komplexbildern und Dispergiermitteln auf Basis von polymeren aliphatischen Carbonsäuren.**

(30) Priorität: **27.07.82 DE 3227915**

(43) Veröffentlichungstag der Anmeldung:
**29.02.84 Patentblatt 84/9**

(45) Bekanntmachung des Hinweises auf die Patenterteilung:
**01.06.88 Patentblatt 88/22**

(84) Benannte Vertragsstaaten:
**AT BE CH DE FR GB IT LI NL SE**

(56) Entgegenhaltungen:
**DE - A - 2 816 539**
**DE - A - 2 816 540**
**DE - A - 2 926 098**
**GB - A - 2 039 542**
**GB - A - 2 066 234**
**US - A - 2 705 668**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Streit, Werner, Dr., Im Woogtal 11,
D-6719 Bobenheim (DE)**
Erfinder: **Bergold, Wolfram, Dr., Am Waldrand 26,
D-6900 Heidelberg (DE)**
Erfinder: **Bassing, Dieter, Stockholmer Weg 11,
D-6700 Ludwigshafen (DE)**

## Beschreibung

Bei der Vorbehandlung und beim Färben von aus Cellulose bestehendem oder Cellulose enthaltendem Textilgut wurden bisher Komplexbildner, wie Aminopolycarbonsäuren, die strukturanalogen Phosphonsäuren sowie Hydroxyalkanpolyphosphonsäuren als Komplexbildner für Erdalkali- und Schwermetalle eingesetzt (vgl. DE-E 718 981). Diese Komplexbildner bilden mit den Metallionen lösliche Komplexe, so dass Ausfällungen verhindert werden, und haben auch die Fähigkeit, bereits vorhandene Niederschläge wieder aufzulösen.

Andererseits wurden Polymerisate oder Copolymerisate der Acrylsäure als Dispergiermittel für z.B. bei Abkoch- und Beuchprozessen aber in auch Färbeflotten auftretende schwerlösliche Anteile von z.B. Calciumpektinaten eingesetzt (vgl. z.B. DE-A 2 926 098). Diese Komplexierungs- und Dispergiermittel wurden bisher in Form ihrer Natriumsalze eingesetzt, wobei auch noch freie Säureanteile (durch unvollständige Neutralisierung) anwesend sein konnten. Im Zuge der Rationalisierung schien es zweckmässig, die beiden Substanzklassen gemeinsam als konzentrierte Lösungen anzusetzen und damit eine einfache und bequeme Dosierung zu erreichen. Beide Substanzklassen wurden bisher meistens als ca. 25 bis 60%ige Lösungen eingestellt und vertrieben. Nun ist es aber nicht möglich, Mischungen der Natriumsalze in Wasser gemeinsam in der gewünschten Konzentration zu lösen, da beide Komponenten einander bei diesen Konzentrationen «aussalzen»; höchstens 10%ige Lösungen sind dann beständig. Auch in Form von freien Säuren ist eine gemeinsame Lösung dieser Konzentration nicht herstellbar.

In der DE-A-2 816 539 wird die Konfektionierung von wasserunlöslichen Pigmentfarbstoffen mit Hilfe von Dispergiermitteln und Redispergiermitteln beschrieben, wobei neben Dispergiermitteln carboxylgruppenhaltige Polymerisate, die als Migrationsinhibitoren wirksam und der Formulierung eine verbesserte Lagerstabilität verleihen, verwendet werden.

Das Ziel der Erfindung bestand in einer gemeinsamen flüssigen Konfektionierung der obengenannten Komplexier- und Dispergiermittel in wässriger, möglichst konzentrierter Lösung.

Überraschenderweise wurde dieses Ziel erreicht durch wässrige homogene 25 bis 60 gew.-%ige, einen pH-Wert von 3 bis 7 aufweisende Lösungen von Mischungen aus

a) Homopolymerisaten der Acrylsäure und/oder Copolymerisaten der Acrylsäure mit bis zu 50 Gew.-% Maleinsäure und/oder Maleinsäureanhydrid und K-Werten von 10 bis 25 und

b) Nitrilotriessigsäure, Polyaminopolycarbonsäuren, Polyaminopolyphosphonsäuren und/oder Hydroxyalkanpolyphosphonsäuren, wobei die gelösten Komponenten vollständig oder zumindest zu 20% in Form der Kaliumsalze und in letzterem Fall der Rest in Form der freien Säure vorliegen, und ihre Verwendung in Vorbehandlungs- oder Färbebädern für aus Cellulose bestehendes oder Cellulose enthaltendes Textilgut, als kombiniertes Dispergier- und Metallionenkomplexierungsmittel.

Die Lösungen in Form ihrer Kaliumsalze fallen auch nicht aus, wenn Lösungen der Einzelkomponenten miteinander vermischt werden und wirken, vor allem was das Calciumbindevermögen betrifft, auch synergistisch zusammen.

Dieser Befund ist deshalb überraschend, weil einmal die Kaliumsalze sowohl der polymeren Carbonsäure als auch die der genannten Komplexbildner nur geringfügig besser wasserlöslich sind als die entsprechenden Natriumsalze, und weil zum anderen, wie wir festgestellt haben, Kaliumsalze der Nitrilotriessigsäure andere polymere Tenside, wie Alkylphenolethoxylate in wesentlich stärkerem Masse aussalzen als die Natriumsalze. Dasselbe musste man auch im vorliegenden Falle erwarten.

Komplexbildner im Sinne der Erfindung sind einmal Nitrilotriessigsäure (NTA), Polyaminopolycarbonsäuren, wie Ethylendiamintetraessigsäure (EDTA), Diethylentriaminpentaessigsäure oder Hydroxyethylethylendiamitriessigsäure (HEDTA) sowie Phosphonsäuren, wie Ethylendiamintetramethylenphosphonsäure oder Hydroxyethandiphosphonsäure.

Die Polymerisate der Acrylsäure weisen einen K-Wert nach Fikentscher von 10 bis 25 auf; wenn es sich um Copolymerisate mit Maleinsäure handelt, so ist letztere bevorzugt zu 10 bis 30 Gew.-% einpolymerisiert.

Zur Herstellung der erfindungsgemässen Lösungen geht man in der Regel so vor, dass man den Komplexbildner und das zu verwendende Polymerisat in der Säureform im Verhältnis 7:1 bis 1:7, vorzugsweise 2:1 bis 1:2 mischt und Wasser in einer Menge zusetzt, dass die spätere Lösung 25 bis 60 Gew.-% an Feststoff enthält.

Es entsteht zunächst eine Suspension, in die man unter mechanischer Bewegung und Kühlung KOH oder Pottasche in einer Menge zugibt, dass die Komponenten zu mindestens 20, vorzugsweise 40 bis 70% neutralisiert sind, d.h. in Form der Kaliumsalze vorliegen. Die Untergrenze entspricht einem pH-Wert von 3. In den meisten Fällen neutralisiert man bis zu pH-Werten von ca. 4,5 bis 6, wobei die Mischung vollständig in Lösung geht.

In den nun folgenden Beispielen soll die Erfindung näher erläutert werden. Teile sind Gewichtsteile.

## Beispiele

Die dispergierende Wirkung der Mischungen wurde getestet, indem man das Ca-Bindevermögen bestimmte, bis in den Lösungen Ausflockungen auftraten.

Die komplexierende Wirkung wurde über das Auflösevermögen gegenüber $CaCO_3$ bestimmt. Dabei wurden 150 mg $CaCO_3$ in 1,0%iger Natronlauge suspendiert.

Anschliessend wird auf 85 °C erhitzt und 1 g der zu prüfenden erfindungsgemässen Lösung zugesetzt. Nach 30 Minuten wird die heisse Suspension abfiltriert, der Rückstand mit Ameisensäure aufgelöst und mit einer Lösung des Dinatriumsalzes der EDTA und Puffertablette als Indikator wieder quantitativ bestimmt.

Die Ergebnisse sind aus der Tabelle am Schluss ersichtlich.

Beispiel 1
38 Teile Polyacrylsäure 50%ig (K-Wert 10–13)
19,2 Teile NTA
13,8 Teile KOH
29 Teile $H_2O$
Wirksubstanz: 48,8%, pH-Wert: 3,6

Beispiel 2
38 Teile Polyacrylsäure 50%ig (K-Wert 10–13)
19,2 Teile EDTA
13,8 Teile KOH
29 Teile $H_2O$
Wirksubstanz: 48,8%, pH-Wert: 5,2

Beispiel 3
23 Teile Polyacrylsäure 50%ig (K-Wert 10–15)
11,5 Teile EDTA
11,5 Teile Triäthanolamin
7,5 Teile KOH
46 Teile $H_2O$
Wirksubstanz: 39,1%, pH-Wert: 5,0

Beispiel 4
20 Teile NTA
19 Teile Polyacrylsäure 100%ig K-Wert 15–25
19 Teile KOH
42 Teile $H_2O$
Wirksubstanz: 50%ig, pH-Wert: 5,0

Beispiel 5
19,5 Teile EDTA
20 Teile Polyacrylsäure 100%ig K-Wert 15–25
3,2 Teile Hydroxyethandiphosphonsäure 100%ig
12,5 Teile KOH
39 Teile $H_2O$
Wirksubstanz: 53%; pH-Wert: 5,1

Beispiel 6
17,8 Teile EDTA
53,5 Teile Mischpolymerisat, hergestellt aus Maleinsäureanhydrid/Acrylsäure (20:80, K-Wert: 20–25), 40%ig in $H_2O$
11,2 Teile KOH
17,5 Teile $H_2O$
Wirksubstanz: 47%; pH-Wert: 5,9

Beispiel 7
39,4 Teile Polyacrylsäure 50%ig (K-Wert 10–13)
12,0 Teile NTA
4,0 Teile Hydroxyethandiphosphonsäure 100%ig
29,6 Teile KOH
15,0 Teile $H_2O$
Wirksubstanz: 55%; pH-Wert: 6,1

Tabelle

| Ca-Bindevermögen in mg $CaCO^3$/g Produkt bei pH 11 | Produkt | Auflösevermögen von $CaCO^3$ in mg/g Produkt in 1,0%iger NaOH |
|---|---|---|
| 725 | Beispiel 1 | 67 |
| 680 | Beispiel 2 | 70 |
| 375 | Beispiel 3 | 32 |
| 290 | Beispiel 4 | 65 |
| 310 | Beispiel 5 | 75 |
| 190 | Beispiel 6 | 55 |
| 1050 | Beispiel 7 | 50 |
| 150 | NTA 40% | 80 |
| 125 | EDTA 40% | 102 |
| 225 | Polyacrylsäure (K-Wert 15–25) 35%ig | 5 |
| 1100 | Polyacrylsäure (K-Wert 10–13) | 3 |

**Patentansprüche**

1. Wässrige homogene 25 bis 60 Gew.-%ige, einen pH-Wert von 3 bis 7 aufweisende Lösungen von Mischungen aus

a) Homopolymerisaten der Acrylsäure und/oder Copolymerisaten der Acrylsäure mit bis zu 50 Gew.-% Maleinsäure und/oder Maleinsäureanhydrid und K-Werten von 10 bis 25 und

b) Nitrilotriessigsäure, Polyaminopolycarbonsäuren, Polyaminopolyphosphonsäuren und/oder Hydroxylalkanpolyphosphonsäuren, dadurch gekennzeichnet, dass die gelösten Komponente vollständig oder zumindest zu 20% in Form der Kaliumsalze und in letzterem Fall der Rest in Form der freien Säure vorliegen.

2. Lösung nach Anspruch 1, dadurch gekennzeichnet, dass darin als Komponente a) Polyacrylsäure und/oder Copolymerisate der Acrylsäure mit Maleinsäure und/oder Maleinsäureanhydrid und als Komponente b) Nitrilotriessigsäure, Ethylendiamintetraessigsäure und/oder Hydroxyethandiphosphonsäure enthalten sind.

3. Lösung nach Anspruch 1 oder 2, dadurch gekennzeichnet, dass die Komponenten a) und b) im Gewichtsverhältnis 7:1 bis 1:7 vorliegen.

4. Verwendung der Lösung gemäss Ansprüchen 1 bis 3 in Vorbehandlungs- oder Färbebädern für aus Cellulose bestehendes oder Cellulose enthaltendes Textilgut, als kombiniertes Dispergier- und Metallionenkomplexierungsmittel.

**Claims**

1. An aqueous homogeneous, from 25 to 60% by weight solution at pH 3–7 of a mixture of
a) a homopolymer of acrylic acid and/or copolymer of acrylic acid containing up to 50% by weight of maleic acid and/or maleic anhydride and having a K value from 10 to 25 and
b) nitrilotriacetic acid, a polyaminopolycarboxylic acid, a polyaminopolyphosphonic acid and/or a hydroxyalkanepolyphosphonic acid, in which the dissolved components are wholly or to at least 20% present in the form of the potassium salts and in the latter case the remainder is present in the form of the free acid.

2. A solution as claimed in claim 1, which contains as component a) polyacrylic acid and/or a copolymer of acrylic acid with maleic acid and/or maleic anhydride and as component b) nitrilotriacetic acid, ethylenediaminetetraacetic acid and/or hydroxyethanediphosphonic acid.

3. A solution as claimed in claim 1 or 2, in which components a) and b) are present in a weight ratio of from 7:1 to 1:7.

4. Use of a solution as claimed in any of claims 1 to 3 in pretreatment or dyeing baths for textile material consisting of or containing cellulose, as a combined dispersing and metal ion complexing agent.

**Revendications**

1. Solutions aqueuses homogènes, possédant une valeur de pH qui flucte de 3 à 7, à 25 à 60% en poids de mélanges constitués
a) d'homopolymères de l'acide acrylique et/ou de copolymères de l'acide acrylique avec jusqu'à 50% en poids d'acide maléique et/ou d'anhydride maléique et des valeurs K de 10 à 25 et
b) d'acide nitrilotriacétique, d'acides polyaminopolycarboxyliques, d'acides polyaminopolyphosphoniques et/ou d'acide hydroxyalcanepolyphosphoniques, caractérisées en ce que les composants dissous se présentent, totalement ou au moins jusque dans la proportion de 20%, sous la forme des sels de potassium et, dans le dernier cas, le reste se présente sous forme des acides libres.

2. Solutions suivant la revendication 1, caractérisées en ce qu'elles contiennent, à titre de composant a), de l'acide polyacrylique et/ou des copolymères de l'acide acrylique avec l'acide maléique et/ou l'anhydride maléique et, à titre de composant b), l'acide nitrilotriacétique, l'acide éthylènediaminetétraacétique et/ou l'acide hydroxyéthanediphosphonique.

3. Solutions suivant la revendication 1 ou 2, caractérisées en ce que les composants a) et b) y sont présents dans le rapport pondéral de 7:1 à 1:7.

4. Utilisation des solutions suivant les revendications 1 à 3, dans des bains de prétraitement ou de teinture pour des matières textiles constituées de cellulose ou contenant de la cellulose, à titre d'agent combiné de dispersion et de complexion d'ions de métaux.